Europäisches Patentamt

European Patent Office

Office européen des brevets

(11) Publication number: **0 229 355**
**A2**

(12) # EUROPEAN PATENT APPLICATION

(21) Application number: **86117641.0**

(51) Int. Cl.4: **G01N 21/59**

(22) Date of filing: **18.12.86**

(30) Priority: **06.01.86 FI 860042**

(43) Date of publication of application:
**22.07.87 Bulletin 87/30**

(84) Designated Contracting States:
**AT BE CH DE ES FR GB GR IT LI NL SE**

(71) Applicant: **Orion Corporation Ltd**
**Saunatontuntie 1**
**SF-02100 Espoo(FI)**

(72) Inventor: **Vainio, Atte Olavi**
**Joupinmäensyrjä 4 B**
**FI-02760 Espoo(FI)**
Inventor: **Niskanen, Aimo Juhani**
**Peipontie 20**
**FI-02650 Espoo(FI)**
Inventor: **Kahma, Kauko Ilmari**
**Niittykuja 2 B 42**
**FI-02200 Espoo(FI)**
Inventor: **Joki, Harri Kalevi**
**Kortelahdenkatu 22 A 6,**
**FI- 33230 Tampere(FI)**
Inventor: **Poramo, Risto A.A.**
**Ruusukuja 2 C 17,**
**FI-33840 Tampere(FI)**
Inventor: **Lekkala, Jukka Olavi,**
**Teekkarinkatu 19 C 45,**
**FI-33720 Tampere(FI)**

(74) Representative: **Vossius & Partner**
**Siebertstrasse 4 P.O. Box 86 07 67**
**D-8000 München 86(DE)**

(54) **Apparatus and method for carrying out photometric assays.**

(57) The invention consists of an apparatus which can be used for the measurement of changes in light intensity in the liquid phase. A characteristic of the apparatus is that it does not include its own light source, but instead the apparatus utilizes ambient illumination. The apparatus can be used instead of a photometer for quantitative, semi-quantitative or qualitative chemical, immunochemical or enzymatic assays and also for other analyses in which change in the intensity of light passing through a liquid phase is recorded between different measurements or alternatively the change is monitored continuously as a function of time. The change in light intensity may result eg. from changes in the size or number of light-absorbing or light-scattering particles in the liquid. The apparatus is inexpensive and can easily be transported. The apparatus also includes the necessary controls, display, A/D-converter or comparator, processing unit, timer and power source. The power source may be eg. a solar cell or a small battery.

Fig. 1

## APPARATUS AND METHOD FOR CARRYING OUT PHOTOMETRIC ASSAYS

The invention consists of an apparatus which can be used for carrying out tests in which the result is expressed as changes in the phototransmittance of a solution to be analyzed. The apparatus can be used for qualitative, semi-quantitative or quantitative analyses in the liquid phase and according to the type of test the assay can be carried out either directly on top of the apparatus, on a separate test plate or well plate or in a cuvette or some similar vessel.

Chemical and immunochemical analyses have traditionally been carried out using complex equipment, a common feature of which has been the production of light, usually of a particular defined wavelength distribution, which can be passed through the liquid sample under investigation. Changes occur in the intensity of the light passing through the liquid due to absorption, scattering, reflection and refraction. Moreover, as a function of either time or wavelength, transmittance of light may occur due to phosphorescence or fluorescence. The change in light intensity is measured as the light passes through the liquid-phase sample to be analyzed. Changes in light intensity due to absorption or scattering are usually monitored. Because the measurement conditions are maintained constant, reflection or refraction do not usually cause measurement errors.

When measuring changes due to absorption in a liquid phase the conditions and the sample concentration are usually chosen so that the changes occurring in light intensity correspond to those changes occurring in the concentrations of the reaction components as a function of time or alternatively the sample concentrations are chosen to lie between those of certain measurable standard solutions. When the chosen system fulfills these conditions, it is said to obey the Lambert-Beer law, according to which the change in intensity of light passing through a solution is proportional to the concentration of absorbing units in the solution. The Lambert-Beer law can be expressed as follows:

$$I = I_0 \cdot e^{-aI}$$

in which I -intensity of the light after passing through the liquid, $I_0$ = initial intensity of the incident light, e = Neper's constant, a = absorption coefficient of the liquid and I = length of the light path through the liquid.

The above equation may be rewritten in a form in which the ratio ($I/I_0$) is represented by the letter A and the variable a is divided into two components E and c. The equation can then be written:

$$A = EcI$$

in which A = absorbance, E = extinction coefficient and c = concentration. Absorbance may alternatively be referred to as optical density (OD), or in some cases the transmittance of a liquid, i.e. the direct ratio between penetrating and non-penetrating light ($I/I_0$), may be used instead of absorbance.

Every chemical compound has its own typical absorption spectrum. When using a photometer, absorption is usually measured in the ultra-violet range (UV, 200 nm-400 nm), the visible range (400 nm-700 nm) or in the near infrared range (IR, 700 nm-900 nm). The light beam used in the measurement is usually arranged to be as nearly monochromatic as possible, using light-absorbing filters, slits or prisms if the ultimate source of light emits a polychromatic beam. Nowadays the source of light may also be eg. light-emitting diodes or light produced be laser technology. In this case the light is sufficiently monochromatic without further treatment.

When measuring changes in a liquid phase due to scattering the conditions and the sample concentration are usually chosen so that the changes in light intensity correspond to those changes which occur in the concentrations of the components of the reaction being measured, or in the size or number of aggregates, as a function of time or are concentration changes or changes in the number or size of aggregates between different liquids. Methods based on scattering are usually employed to measure the disintegration of macromolecules, aggregates, emulsions or suspensions or alternatively the formation of aggregates; eg. the agglutination reaction between the two components of an immunological pair, one of which may be attached to a carrier and the other in free solution in the liquid under examination. When electromagnetic light energy hits a small particle it forces the electron clouds surrounding the molecules of the particle out of place and causes them to vibrate synchronically with the electromagnetic energy of the light. This in turn causes the electron cloud to emit light in all directions. The scattering is highly dependent on the size and shape of the particle. The amount of light scattered is in its turn highly dependent on the wavelength of the incident light if the diameter of the particles is less than 1/20 of the wavelength of the light. If the particles are spherical, the scattering obeys the Rayleigh scattering model:

$$I = I_0 \cdot \frac{8 \pi^4 a^2}{R^2 \lambda^4} \cdot (1 + \cos^2 \emptyset)$$

in which I = intensity of the scattered light, $I_0$ = intensity of the incident light, a = polarization of the molecule, r = separation of the particle and the point of observation, $\emptyset$ = angle between the scattered and incident light and $\lambda$ = wavelength.

The Rayleigh scattering law is valid only when the particle size is smaller than the wavelength of the light. Under these conditions the scattering pattern is symmetrical. In the case of larger particles the scattering becomes asymmetrical and is referred to as Mie-scattering.

The type of apparatus traditionally used in photometric technology is complex, difficult to move and expensive to acquire. The equipment also usually requires a fixed storing space. Many different instruments based on photometric technology are available on the market in addition to actual photometers, ed. different automatic and semi-automatic analyzers and measuring units used in immunoassays. In many cases the accuracy of the assay is affected by other factors than the photometric measurement itself. In such situations there is a need for inexpensive and freely mobile photometric measuring equipment.

We have developed an apparatus which is inexpensive to produce and easy to move. The primary component of the apparatus is a light detector, on the top of which a chemical or immunochemical analysis is carried out. According to the application at hand the solution to be assayed may be placed as such on the light detector or it may be placed on a separate test plate or measuring well plate or added to a cuvette. The apparatus may include the necessary analyzing units for carrying out the simultaneous measurement of several samples. One such unit is composed of at least one light detector, on the top of which the actual measurement is carried out. In addition the unit may also contain a light detector on the top of which a control measurement is carried out. Moreover the unit may also include a light detector which monitors the light characteristics in the surrounding space. Alternatively the apparatus may operate so that the same light detector may function in two or more modes at different times. Thus the same light detector may carry out several different measurements. The apparatus may be used to carry out kinetic measurements. In addition the apparatus may carry out an initial zero measurement to compensate for the ambient light intensity.

The apparatus uses external light as its source of light, so that the wavelength utilized is determined by that of the external light souce. The wavelength range may be defined by using eg. filters passing only monochromatic light of a certain fixed wavelength.

The apparatus also includes the necessary controls and a suitable display showing either absorbance or concentration, either in relative units or numerically. The apparatus also includes a power souce, which may be eg. a solar cell, a battery or accumulator, an A/D converter or a comparator, a processing unit and a timer.

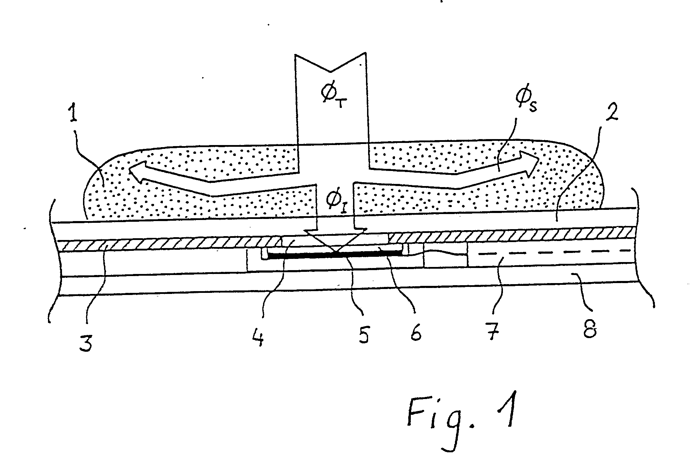

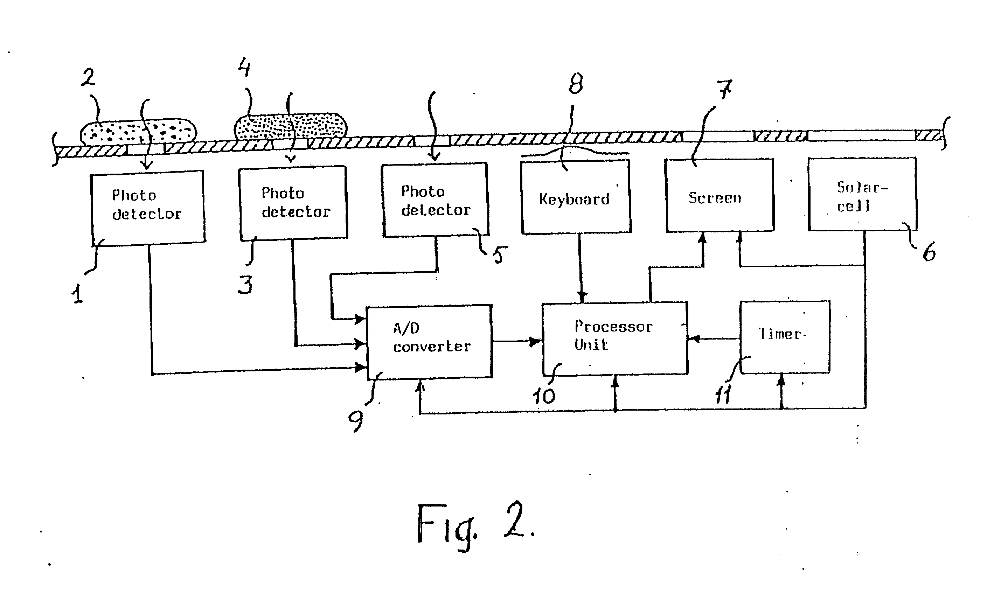

The invention is described in detail in the following with reference to the accompanying figures, in which Figure 1 presents the principle governing the measurement of light passing through a drop of sample liquid, and Figure 2 presents a flow diagram of the apparatus carrying out the method as described in this invention.

The measurement of light passing through a sample drop is presented as a cross-sectional diagram in Figure 1. The sample drop 1 is pipetted onto the top surface of a polymer sheet 2. The lower surface of the polymer sheet 2 is coated with a non-transmitting film 3 in which there is a hole 4 for the purpose of the measurement. The size of the hole 4 is dependent on the size and shape of the drop 1 and on the size of the light detector 5. The drop 1 must however completely cover the hole 4. In line with the hole 4, below the covering sheets 2 and 3, is a light detector 5, which measures the amount of light passing through the hole 4 in the film 3. The light detector may be eg. a light resistor, a photodiode or a phototransistor. The light entering the light detector 5 may be filtered with the filter 6. The amount $\emptyset_l$ of light entering the light detector 5 is proportional to the difference between the amount $\emptyset_i$ of light entering the sample drop 1 from the environment and the amount $\emptyset_s$ of light leaving the drop to the environment or surrounding matrix due to scattering, absorption, reflection and refraction. Thus the light detector can be used to detect changes in the size and number of particles in the sample drop or altered light intensity due to absorption. The signal processing circuits 7 of the light detector 5 are protected by a plastic film 8.

A flow diagram of an apparatus carrying out the method described in this invention is presented in Figure 2.

3

The apparatus may include three light detectors with different functions. The light detector 1 measures light passing throug the sample drop 2. The sample drop 2 contains a reagent and the sample. The light detector 3 measures light passing through the reference drop 4 which may contain eg. a negative control reagent. The light detector 5 measures the illumination of the surrounding environment directly. When the apparatus is placed in a situation with sufficient illumination the solar cell 6 provides electric current and the apparatus is ready for measurement. The electrical energy required for operation of the apparatus may also be obtained from an internal source such as a battery or accumulator. Operational readiness is indicated on the display 7. This indication is at the same time an indication of the sufficiency of illumination and of the state of charge of the possible battery or accumulator. The measurement is started by pressing the zero calibration button 8, after which the display 7 is zeroed and the signal entering the apparatus from each light detector is converted to digital form in the A/D-converter 9 and transferred to the memory in the processing unit 10. Simultaneously, the timer 11 is started. When the timer 11 has measured a time T, the signals transmitted by the light detectors are again transferred to the processing unit 10. On the basis of the two measurement results given by the light detector 5 the change $d\emptyset_T$ in ambient illumination during the time T is calculated. Similarly, the signals transmitted by the light detectors 1 and 3 are used to calculate the changes $d\emptyset_N$ and $d\emptyset_R$ occurring in the light passing through the sample drop 2 and the reference drop 4 over the same time period T. The signal corresponding to the change $d\emptyset_N$ in the light passing through the sample drop 2 is first corrected for the change $d\emptyset_T$ occurring in the ambient illumination and the change $d\emptyset_R$ occurring in the reference drop 4, and then scaled and taken to the display 7. If it is only required to indicate whether the change in the sample drop 2 exceeds a certain threshold value, the A/D converter is a comparator, i.e. a single-bit A/D-conversion is carried out.

### Example 1

The test is carried out on a table, above which is a 40 W fluorescent strip lamp at a distance of 60 cm from the photodiodes functioning as detector. To the cylindrical glass-bottomed vessel on top of the photodiode are added different concentrations of solutions of the reaction products of o-phenylenediamine and peroxidase enzyme in a 2 mm layer.

When the absorbance of the solution at a wavelength of 492 mm and with a light path of 2 mm is 1.4, the voltage change with respect to the original situation is 11 mV. When the absorbance of the solution is 0.3, the voltage change is 2 mV.

### Claims

1. An apparatus for measuring changes in light intensity in the liquid phase, in which the apparatus includes a light detector, with the aid of which the magnitude of the change in light intensity is observed along the route which external light, not produced by the apparatus, takes to reach the light detector.

2. An apparatus according to claim 1 in which the light detector is a photoresistor, photodiode or phototransistor.

3. An apparatus according to claims 1 and 2 in which the power source of the apparatus is a solar cell.

4. A method for measuring changes in light intensity in the liquid phase, in which the apparatus includes a light detector, with which the number of changes in light intensity is observed along the route which external light, not produced by the apparatus, takes to reach the light detector.

5. A method according to claim 4, in which the light detector is a photoresistor, a photodiode or a phototransistor.

6. A method according to claims 4 and 5, in which the power source of the apparatus is a solar cell.

4

Fig. 1

0 229 355

Photo detector

Photo detector

Photo detector

Keyboard

Screen

Solar-cell

A/D converter

Processor Unit

Timer

Fig. 2.